(19) **Europäisches Patentamt / European Patent Office / Office européen des brevets**

(11) **EP 1 760 928 B1**

(12) **EUROPEAN PATENT SPECIFICATION**

(45) Date of publication and mention
of the grant of the patent:
**02.11.2011 Bulletin 2011/44**

(51) Int Cl.:
*H04L 1/18* (2006.01)     *H04L 27/34* (2006.01)

(21) Application number: **06021982.1**

(22) Date of filing: **21.02.2001**

(54) **Hybrid ARQ method with mapping rearrangement of the signals constellation**

Hybrides ARQ-Verfahren mit Neuanordnung von der Abbildung der Signalkonstellation

Procédé ARQ hybride avec réarrangement de mappage de la constellation de signaux

(84) Designated Contracting States:
**AT BE CH CY DE DK ES FI FR GB GR IE IT LI LU MC NL PT SE TR**

(43) Date of publication of application:
**07.03.2007 Bulletin 2007/10**

(60) Divisional application:
**10178347.0 / 2 259 477**

(62) Document number(s) of the earlier application(s) in accordance with Art. 76 EPC:
**04001471.4 / 1 427 128**
**01923594.4 / 1 293 059**

(73) Proprietor: **Panasonic Corporation**
**Kadoma-shi**
**Osaka 571-8501 (JP)**

(72) Inventors:
- **Golitschek Edler von Elbwart, Alexander**
  **63225 Langen (DE)**
- **Wengerter, Christian**
  **63225 Langen (DE)**
- **Schmitt, Michael Philipp**
  **63225 Langen (DE)**
- **Seidel, Eiko**
  **63225 Langen (DE)**

(74) Representative: **Grünecker, Kinkeldey,**
**Stockmair & Schwanhäusser**
**Leopoldstrasse 4**
**80802 München (DE)**

(56) References cited:
**EP-A- 0 938 207     US-A- 6 138 260**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 760 928 B1

## Description

The present invention relates to a hybrid ARQ retransmission method in a communication system.

A common technique in communication systems with unreliable and time-varying channel conditions is to correct errors based on automatic repeat request (ARQ) schemes together with a forward error correction (FEC) technique called hybrid ARQ (HARQ). If an error is detected by a commonly used cyclic redundancy check (CRC), the receiver of the communication system requests the transmitter to resend the erroneously received data packets.

S. Kallel, Analysis of a type II hybrid ARQ scheme with code combining, IEEE Transactions on Communications, Vol.38, No. 8, August 1990 and S. Kallel, R. Link, S. Bakhtiyari, Throughput performance of Memory ARO schemes, IEEE Transactions on Vehicular Technology, Vol.48, No. 3, May 1999 define three different types of ARQ schemes:

■ Type I: The erroneous received packets are discarded and a new copy of the same packet is retransmitted and decoded separately. There is no combining of earlier and later received versions of that packet.

■ Type II: The erroneous received packets are not discarded, but are combined with some incremental redundancy bits provided by the transmitter for subsequent decoding. Retransmitted packets sometimes have higher coding rates and are combined at the receiver with the stored values. That means that only little redundancy is added in each retransmission.

■ Type III: Is the same as Type II with the constraint each retransmitted packet is now self-decodable. This implies that the transmitted packet is decodable without the combination with previous packets. This is useful if some packets are damaged in such a way that almost no information is reusable.

Types II and III schemes are obviously more intelligent and show a performance gain with respect to Type 1 because they provide the ability to reuse information from of previously received erroneous packets. There exist basically three schemes of reusing the redundancy of previously transmitted packets:

■ Soft-Combining
■ Code-Combining
Combination of Soft- and Code-Combining

Soft-Combining

Employing soft-combining the retransmission packets carry identical symbols compared with the previously received symbols. In this case the multiple received packets are combined either by a symbol-by-symbol or by a bit-by-bit basis as for example disclosed in D. Chase, Code combining: A maximum-likelihood decoding approach for combining an arbitrary number of noisy packets, IEEE Trans. Commun., Vol. COM-33, pp. 385-393, May 1985 or B.A. Harvey and S. Wicker, Packet Combining Systems based on the Viterbi Decoder, IEEE Transactions on Communications, Vol. 42, No. 2/3/4, April 1994. By combining this soft-decision values from all received packets the reliabilities of the transmitted bits will increase linearly with the number and power of received packets. From a decoder point of view the same FEC scheme (with constant code rate) will be employed over all transmissions. Hence, the decoder does not need to know how many retransmissions have been performed, since it sees only the combined soft-decision values. In this scheme all transmitted packets will have to carry the same number of symbols.

Code-Combining

Code-combining concatenates the received packets in order to generate a new code word (decreasing code rate with increasing number of transmission). Hence, the decoder has to be aware of the FEC scheme to apply at each retransmission instant. Code-combining offers a higher flexibility with respect to soft-combining, since the length of the retransmitted packets can be altered to adapt to channel conditions. However, this requires more signaling data to be transmitted with respect to soft-combining.

Combination of Soft- and Code-Combining

In case the retransmitted packets carry some symbols identical to previously transmitted symbols and some code-symbols different from these, the identical code-symbols are combined using soft-combing as described in the section titled "Soft Combining" while the remaining code-symbols will be combined using code-combining. Here, the signaling requirements will be similar to code-combining.

As it has been shown in M.P. Schmitt, Hybrid ARQ. Scheme employing TCM and Packet Combining, Electronics Letters Vol. 34, No. 18, September 1998 that HARQ performance for Trellis Coded Modulation (TCM) can be enhanced by rearranging the symbol constellation for the retransmissions. There, the performance gain results from the maximizing the Euclidean distances between the mapped symbols over the retransmissions, because the rearrangement has been performed on a symbol basis.

Considering high-order modulation schemes (with modulation symbols carrying more than two bits) the combining methods employing soft-combining have a major drawback: The bit reliabilities within soft-combined symbols will be in a constant ratio over all retransmissions, i.e. bits which have been less reliable from previous received transmissions will still be less reliable after having received further transmissions and, analogous, bits which have been more reliable from previous received transmissions will still be more reliable after having received further transmissions.

The varying bit reliabilities evolve from the constraint of two-dimensional signal constellation mapping, where modulation schemes carrying more than 2 bits per symbol cannot have the same mean reliabilities for all bits under the assumption that all symbols are transmitted equally likely. The term mean reliabilities is consequently meant as the reliability of a particular bit over all symbols of a signal constellation.

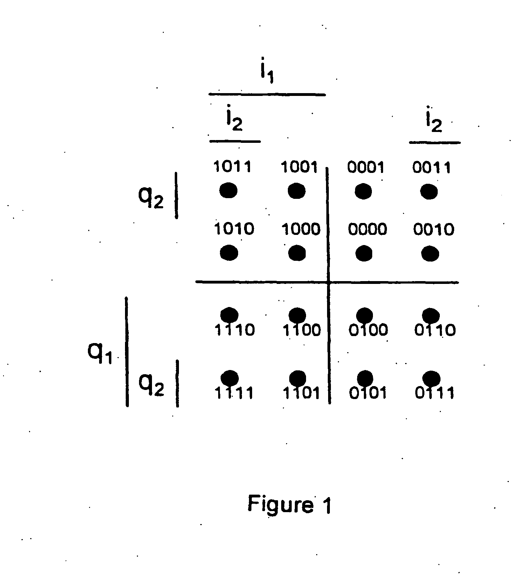

Employing a signal constellation for a 16 QAM modulation scheme according to Figure 1 showing a Gray encoded signal constellation with a given bit-mapping order $i_1 q_1 i_2 q_2$, the bits mapped onto the symbols differ from each other in mean reliability in the first transmission of the packet. In more detail, bits $i_1$ and $q_1$ have a high mean reliability, as these bits are mapped to half spaces of the signal constellation diagram with the consequences that their reliability is independent from the fact of whether the bit transmits a *one* or a *zero*.

In contrast thereto, bits $i_2$ and $q_2$ have a low mean reliability, as their reliability depends on the fact of whether they transmit a *one* or a *zero.* For example, for bit $i_2$, ones are mapped to outer columns, whereas zeros are mapped to inner columns. Similarly, for bit $q_2$, ones are mapped to outer rows, whereas zeros are mapped to inner rows.

For the second and each further retransmissions the bit reliabilities will stay in a constant ratio to each other, which is defined by the signal constellation employed in the first transmission, i.e. bits $i_1$ and $q_1$ will always have a higher mean reliability than bits $i_2$ and $q_2$ after any number of retransmissions.

EP-A-938207 discloses an incremental redundancy transmission communication system, wherein data blocks for a time slot are transmitted after modulation of a certain type. In the next time slot, based on channel quality feedback, another modulation format may be utilized, such as 4 level (PSK), 8 level and 16 level (PSK or QAM) modulation. Further, the used coding and/or modulation format is indicated using an adaptation field. A channel quality indicator is used to denote the advisable or maximum allowable modulation format for subsequent assignments.

US 6,138,260 A discloses a Hybrid ARQ system within a multiple access wireless communications environment for recombining ARQ retransmission signals with information obtained from corresponding previously failed transmissions of the same signal, which had been sender-received within the air interface. Further, forward error correction (FEC) is implemented within an ARQ environment.

The object underlying the present invention is to provide a hybrid ARQ retransmission method with an improved error correction performance. The invention is defined in the independent claims particular embodiments are set out in the dependent claims.

The method and system subject to the invention is based on the recognition that in order to en hance the decoder performance, it would be quite beneficial to have equal or near to equal mean bit reliabilities after each received transmission of a packet. Hence, the idea underlying the invention is to tailor the bit reliabilities over the retransmissions in a way that the mean bit reliabilities get averaged out. This is achieved by choosing a predetermined first and at least second signal constellation for the transmissions, such that the combined mean bit reliabilities for the respective bits of all transmissions are nearly equal.

Hence, the signal constellation rearrangement results in a changed bit mapping, wherein the Euclidean distances between the modulation symbols can be altered from retransmission to retransmission due to the movement of the constellation points. As a result, the mean bit reliabilities can be manipulated in a desired manner and averaged out to increase the performance the FEC decoder at the receiver.

For a more in depth understanding of the present invention, preferred embodiments will be described in the following with reference to the accompanying drawings.

Figure 1 is an exemplary signal constellation for illustrating a 16 QAM modulation scheme with Gray encoded bit symbols,

figure 2 shows four examples for signal constellations for a 16 QAM modulation scheme with Gray encoded bit symbols,

figure 3 shows an exemplary signal constellation for 64-QAM Gray encoded bit symbols,

figure 4 shows six exemplary signal constellations for 64-QAM Gray encoded bit symbols

figure 5 is an exemplary embodiment of a communication system in which the method underlying the invention is employed, and

figure 6 explains details of the mapping unit shown in figure 5.

For a better understanding of the embodiments, in the following the concept of a Log-Likelihood-Ratio (*LLR*) will be described as a metric for the bit reliabilities. First the straight forward calculation of the bit *LLR*s within the mapped symbols for a single transmission will be shown. Then the *LLR* calculation will be extended to the multiple transmission case.

Single Transmission

The mean LLR of the *i*-th bit $b_n'$ under the constraint that symbol $s_n$ has been trans mitted for a transmission over a channel with additive white gaussian noise (AWGN) arid equally likely symbols yields

$$LLR_{b_n^i|r_n}(r_n) = \log\left[\sum_{(m|b_m^i=b_n^i)} e^{-\frac{E_s}{N_0} d_{n,m}^2}\right] - \log\left[\sum_{(m|b_m^i \neq b_n^i)} e^{-\frac{E_s}{N_0} d_{n,m}^2}\right], \qquad (1)$$

where $r_n = s_n$ denotes the mean received symbol under the constraint the symbol $s_n$ has been transmitted (AWGN case), $d_{n,m}^2$ denotes the square of the Euclidean distance between the received symbol $r_n$ and the symbol $s_m$, and $E_s/N_0$ denotes the observed signal-to-noise ratio.

It can be seen from Equation (1) that the *LLR* depends on the signal-to-noise ratio $E_s/N_0$ and the Euclidean distances $d_{n,m}$ between the signal constellation points.

Multiple Transmissions

Considering multiple transmissions the mean *LLR* after the k-th transmission of the *i*-th bit $b_n^i$ under the constraint that symbols $s_n^{(j)}$ have been transmitted over independent AWGN channels and equally likely symbols yields

$$LLR_{b_n^i|\prod_{j=1}^k r_n^{(j)}}\left(r_n^{(1)}, r_n^{(2)}, \ldots, r_n^{(k)}\right) = \log\left[\sum_{(m|b_m^i=b_n^i)} e^{-\sum_{j=1}^k \left(\frac{E_s}{N_0}\right)^{(j)} \left(d_{n,m}^{(j)}\right)^2}\right] - \log\left[\sum_{(m|b_m^i \neq b_n^i)} e^{-\sum_{j=1}^k \left(\frac{E_s}{N_0}\right)^{(j)} \left(d_{n,m}^{(j)}\right)^2}\right], \qquad (2)$$

where j denotes the j-th transmission ((*j*-1)-th retransmission). Analogous to the single transmission case the mean *LLR*s depend on the signal-to-noise ratios and the Euclidean distances at each transmission time.

If no constellation rearrangement is performed the Euclidean distances $d_{n,m}^{(j)} = d_{n,m}^{(1)}$ are constant for all transmissions and, hence, the bit reliabilities (*LLR*s) after *k* transmissions will be defined by the observed signal-to-noise ratio at each transmission time and the signal constellation points from the first transmission. For higher level modulation schemes (more than 2 bits per symbol) this results in varying mean *LLRs* for the bits, which in turn leads to different mean bit reliabilities. The differences in mean reliabilities remain over all retransmissions and lead to a degradation in decoder performance.

## 16-QAM Strategy

In the following, the case of a 16-QAM system will be exemplarily considered resulting in 2 high reliable and 2 low reliable bits, where for the low reliable bits the reliability depends on transmitting a *one* or a *zero* (see Figure 1). Hence, overall there exist 3 levels of reliabilities.

**Level 1** (High Reliability, 2 bits): Bit mapping for *ones* (*zeros)* separated into the positive (negative) real half space for the i-bits and the imaginary half space the q-bits. Here, there is no difference whether the *ones* are mapped to the positive or to the negative half space.

**Level 2** (Low Reliability, 2 bits): *Ones* (*zeros*) are mapped to inner (outer) columns for the i-bits or to inner (outer) rows for the q-bits. Since there is a difference for the *LLR* depending on the mapping to the inner (outer) columns and rows, Level 2 is further classified:

**Level 2a**: Mapping of $i_n$ to inner columns and $q_n$ to inner rows respectively.

**Level 2b**: Inverted mapping of Level 2a: Mapping of in to outer columns and $q_n$ to outer rows respectively.

To ensure an optimal averaging process over the transmissions for all bits the levels of reliabilities have to be altered by changing the signal constellations according to the algorithms given in the following section.

It has to be considered that the bit-mapping order is open prior initial transmission, but has to remain through retransmissions, e.g. bit-mapping for initial transmission: $i_1 q_1 i_2 q_2$ => bit-mapping all retransmissions: $i_1 q_1 i_2 q_2$.

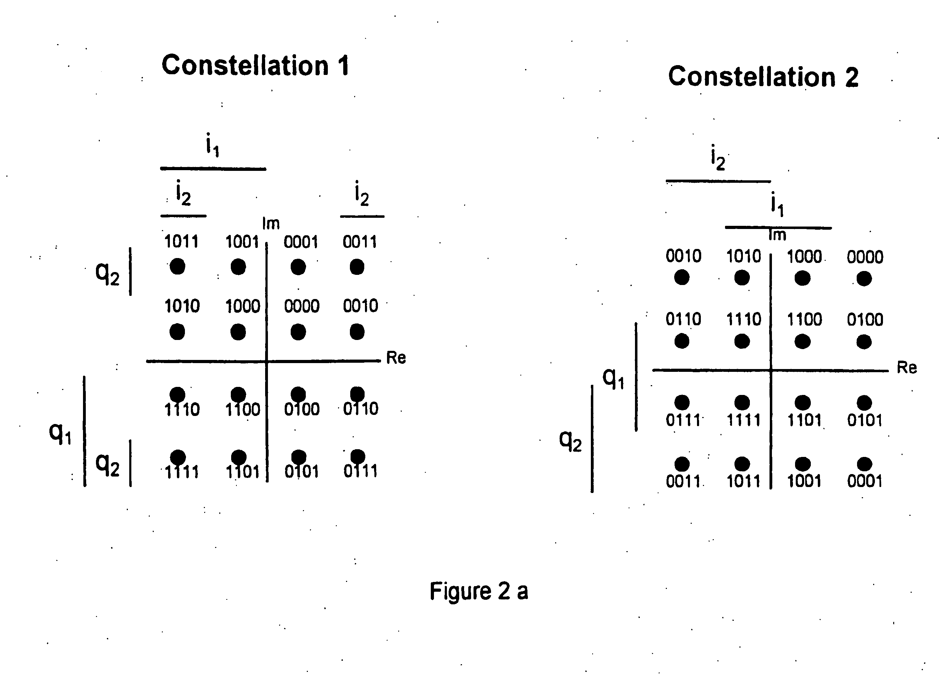

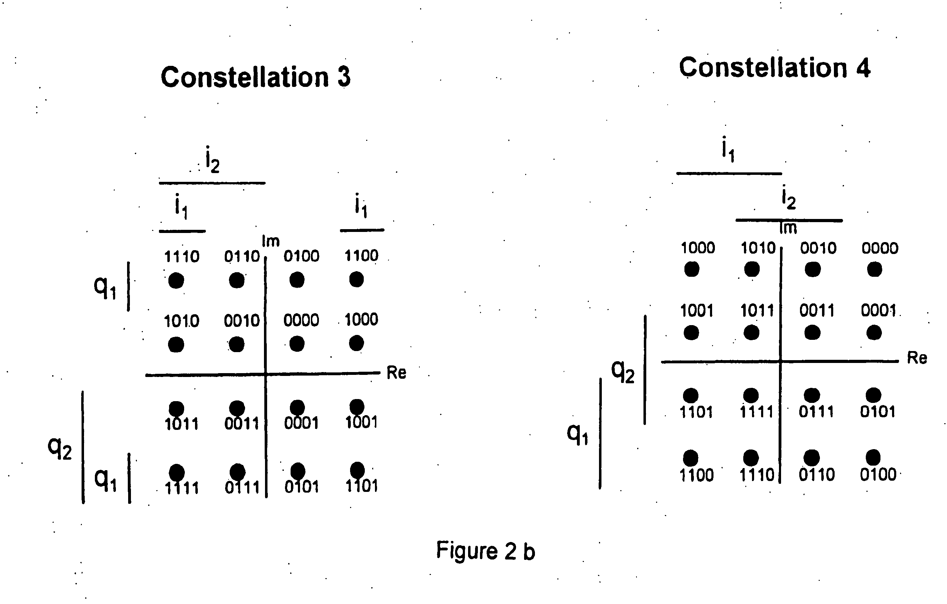

For the actual system implementation there are a number of possible signal constellations to achieve the averaging process over the retransmissions. Some examples for possible constellations are shown in Figure 2. The resulting bit reliabilities according to Figure 2 are given in Table 1.

| Constella-tion | bit $i_1$ | bit $q_1$ | bit $i_2$ | bit $q_2$ |
|---|---|---|---|---|
| 1 | High Reliability (Level 1) | High Reliability (Level 1) | Low Reliability (Level 2b) | Low Reliability (Level 2b) |
| 2 | Low Reliability (Level 2a) | Low Reliability (Level 2a) | High Reliability (Level 1) | High Reliability (Level 1) |
| 3 | Low Reliability (Level 2b) | Low Reliability (Level 2b) | High Reliability (Level 1) | High Reliability (Level 1) |
| 4 | High Reliability (Level 1) | High Reliability (Level 1) | Low Reliability (Level 2a) | Low Reliability (Level 2a) |

Table 1.     Bit reliabilities for 16-QAM according to signal constellations shown in Figure 2

Moreover, Table 2 provides some examples how to combine the constellations for the transmissions 1 to 4 (using 4 different mappings).

Table 2. Examples for Constellation Rearrangement strategies for 16-QAM (using 4 mappings) with signal constellations according to Figure 2 and bit reliabilities according to Table 1.

| Transmission No. | Scheme 1 (with Constel lations) | Scheme 2 (with Constellations) | Scheme 3 (with Constellations) | Scheme 4 (with Constellations) |
|---|---|---|---|---|
| 1 | 1 | 1 | 1 | 1 |
| 2 | 2 | 2 | 3 | 3 |
| 3 | 3 | 4 | 2 | 4 |
| 4 | 4 | 3 | 4 | 2 |

Two algorithms are given which describe schemes using 2 or 4 mappings overall. The approach using 2 mappings results in less system complexity, however has some performance degradation with respect to the approach using 4 mappings. The mapping for i- and q-bits can be done independently and, hence, in the following the mapping for the i-bits only is described. The algorithms for the q-bits work analog.

**16-QAM Algorithms**

A. Using 2 Mappings

1. Step (1. Transmission)

Choose Level 1 for $i_1$ $\Rightarrow$ Leve 2 for $i_2$-free choice if 2a or 2b

$\Rightarrow$ **1. Mapping defined**

2. Step (2. Transmission)

Choose Level 1 for $i_2$ $\Rightarrow$ Level 2 for $i_1$ - free choice if 2a or 2b

$\Rightarrow$ **2. Mapping defined**

3. Step

Options:

(a) Go to 1. Step and proceed with alternating between 1. and 2. Mapping
(b) Use 2. Mapping and proceed with using 2 times 1. Mapping, 2 times 2. Mapping and so on ...

B. Using 4 Mappings

1. Step (1. Transmission)

Choose Level 1 for $i_1$ $\Rightarrow$ Level 2 for $i_2$ - free choice if 2a or 2b

$\Rightarrow$ **1. Mapping defined**

2. Step (2. Transmission)

Choose Level 1 for $i_2$ $\Rightarrow$ Level 2 for $i_1$ - free choice if 2a or 2b

$\Rightarrow$ **2. Mapping defined**

3. Step (3. Transmission)

Options:

(a) Choose Level 1 for $i_1$ $\Rightarrow$ Level 2 for $i_2$ with following options

(a1) if in 1. Transmission 2a was used then use 2b
(a2) if in 1. Transmission 2b was used then use 2a

(b) Choose Level 1 for $i_2$ $\Rightarrow$ Level 2 for $i_1$ with following options

(b1) if in 2. Transmission 2a was used then use 2b
(b2) if in 2. Transmission 2b was used then use 2a

$\Rightarrow$ **3. Mapping defined**

4. Step (4. Transmission)

if option (a) in 3. Step
Choose Level 1 for $i_2$ $\Rightarrow$ Level 2 for $i_1$ with following options

(a1) if in 2. Transmission 2a was used then use 2b
(a2) if in 2. Transmission 2b was used then use 2a if option (b) in 3. Step

Choose Level 1 for $i_1 \Rightarrow$ Level 2 for $i_2$ with following options

(a1) if in 1. Transmission 2a was used then use 2b
(a2) if in 1. Transmission 2b was used then use 2a

$\Rightarrow$ **4. Mapping defined**

5. Step (5., 9., 13., ... Transmission)

Choose one out of 4 defined mappings

6. Step (6., 10., 14., ... Transmission)

Choose one out of 4 defined mappings except

(a) the mapping used in 5. Step (previous transmission)
(b) the mapping giving Level 1 reliability to the same bit as in previous transmission

7. Step (7., 11., 15., ... Transmission)

Choose one out of 2 remaining mappings not used in last 2 transmissions

8. Step (8., 12., 16., ... Transmission)

Choose mapping not used in last 3 transmissions

9. Step

Go to 5. Step

**64-QAM Strategy**

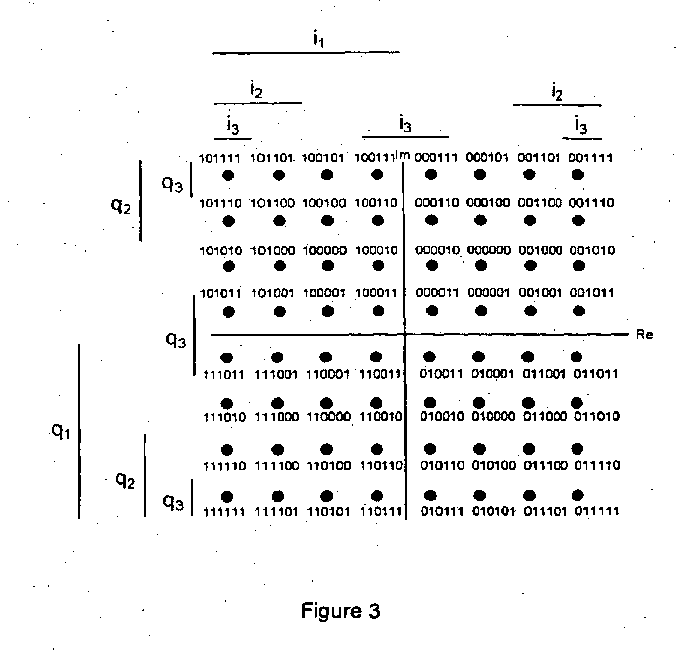

In case of a 64-QAM system there will be 2 high reliable, 2 medium reliable and 2 low reliable bits, where for the low and medium reliable bits the reliability depends on transmitting a *one* or a *zero* (see Figure 3). Hence, overall there exist 5 levels of reliabilities.

**Level 1** (High Reliability, 2 bits): Bit mapping for ones (zeros) separated into the positive (negative) real half space for the i-bits and the imaginary half space for the q-bits. Here, there is no difference whether the *ones* are mapped to the positive or to the negative half space.

**Level 2** (Medium Reliability, 2 bits): *Ones* (zeros) are mapped to 4 inner and 2x2 outer columns for the i-bits or to 4 inner and 2x2 outer rows for the q-bits. Since there is a difference for the *LLR* depending on the mapping to the inner or outer column/row Level 2 is further classified:

**Level 2a**: Mapping of in to 4 inner columns and $q_n$ to 4 inner rows respectively.

**Level 2b**: Inverted mapping of 2a: $i_n$ to outer columns and $q_n$ to outer rows respectively

**Level 3** (Low Reliability, 2 bits): *Ones* (zeros) are mapped to columns 1-4-5-8/2-3-6-7 for the i-bits or to rows 1-4-5-8/2-3-6-7 for the q-bits. Since there is a difference for the *LLR* depending on the mapping to columns/rows 1-4-5-8 or 2-3-6-7 Level 3 is further classified:

**Level 3a:** Mapping of in to columns 2-3-6-7 and $q_n$ to rows 2-3-6-7 respectively

**Level 3b:** Inverted mapping of 2a: in to columns 1-4-5-8 and $q_n$ to rows 1-4-5-8 respectively

To ensure an optimal averaging process over the transmissions for all bits the levels of reliabilities have to be altered by changing the signal constellations according to the algorithms given in the following section.

It has to be considered that the bit-mapping order is open prior initial transmission, but has to remain through retransmissions, e.g. bit-mapping for initial transmission: $i_1q_1i_2q_1i_3q_3 \Rightarrow$ bit-mapping all retransmissions: $i_1q_1i_2q_2\ i_3q_3$.

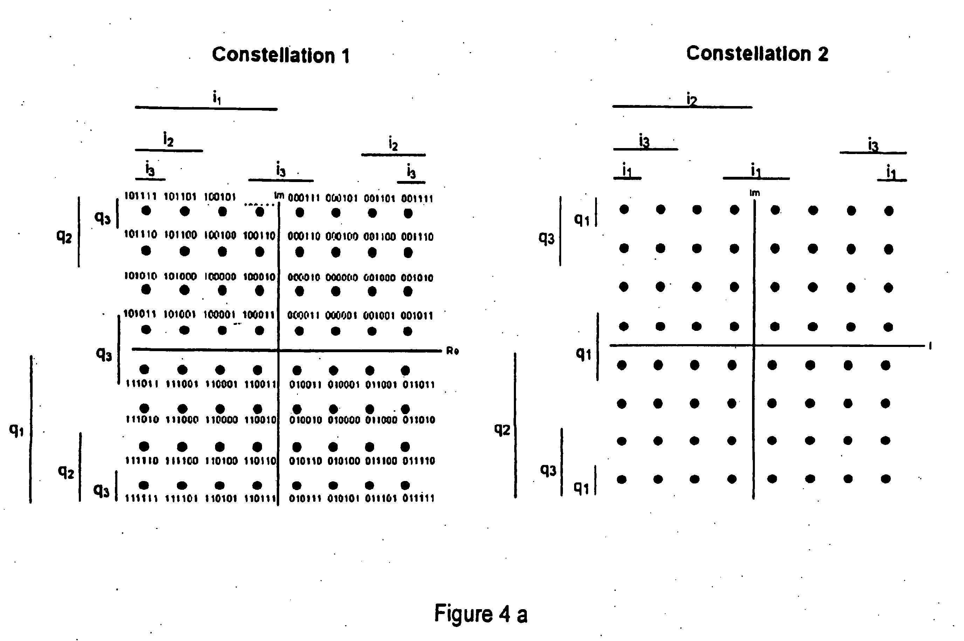

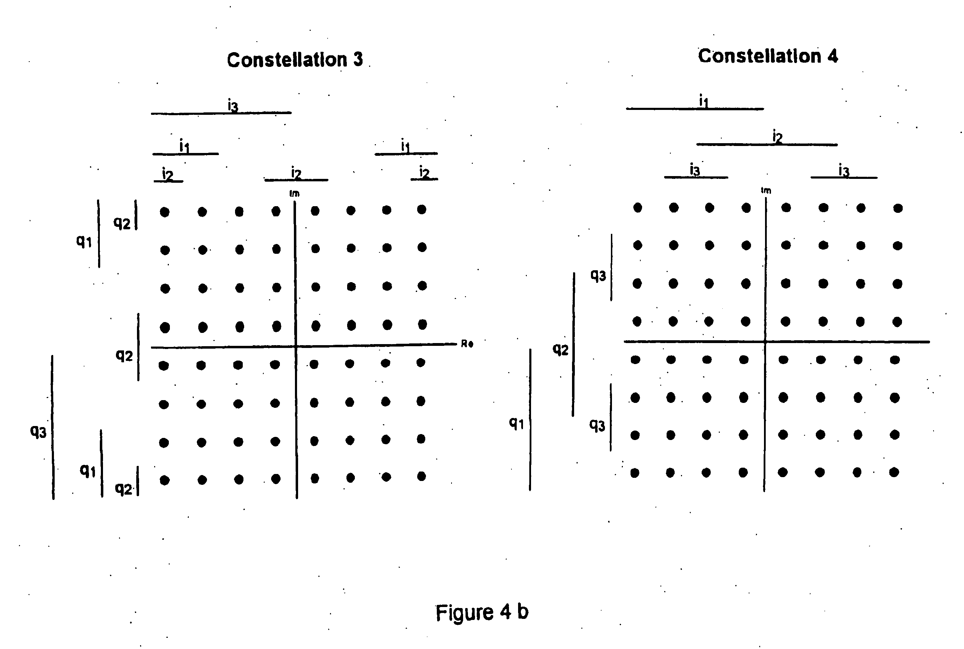

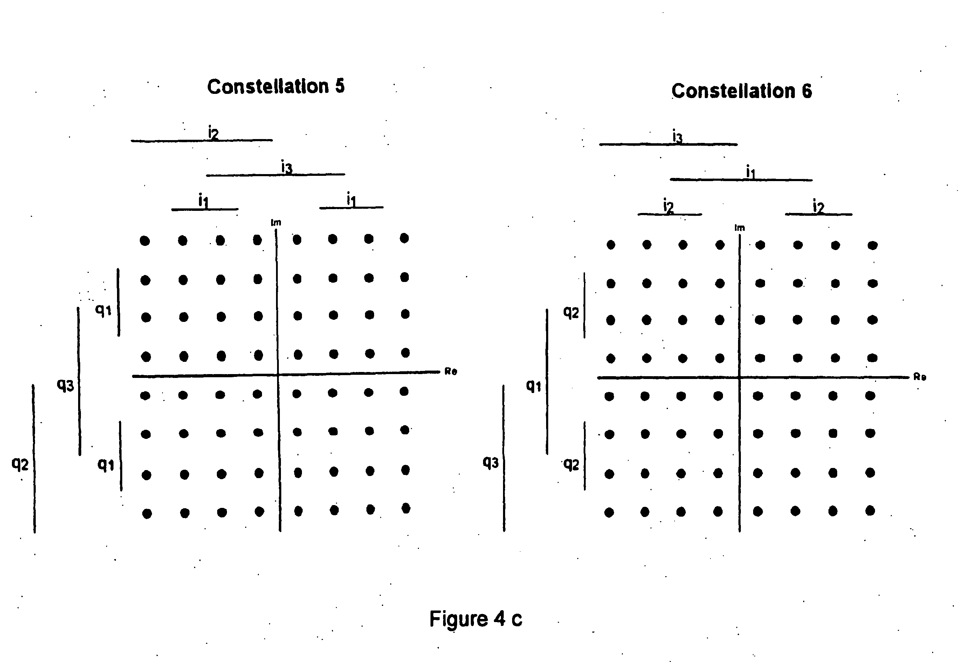

Analog to 16-QAM for the actual system implementation there are a number of possible signal constellations to achieve the averaging process over the retransmissions. Some examples for possible constellations are shown in Figure 4. The resulting bit reliabilities according to Figure 4 are given in Table 3.

| Constel- lation | bit $i_1$ | bit $q_1$ | bit $i_2$ | bit $q_2$ | bit $i_3$ | bit $q_3$ |
|---|---|---|---|---|---|---|
| 1 | High Reli- ability (Level 1) | High Reli- ability (Level 1) | Middle Reli- ability (Level 2b) | Middle Reli- ability (Level 2b) | Low Reliabil- ity (Level 3b) | Low Reliabil- ity (Level 3b) |
| 2 | Low Reliabil- ity (Level 3b) | Low Reliabil- ity (Level 3b) | High Reli- ability (Level 1) | High Reli- ability (Level 1) | Middle Reli- ability (Level 2b) | Middle Reli- ability (Level 2b) |
| 3 | Middle Reli- ability (Level 2b) | Middle Reli- ability (Level 2b) | Low Reliabil- ity (Level 3b) | Low Reliabil- ity (Level 3b) | High Reli- ability (Level 1) | High Reli- ability (Level 1) |
| 4 | High Reli- ability (Level 1) | High Reli- ability (Level 1) | Middle Reli- ability (Level 2a) | Middle Reli- ability (Level 2a) | Low Reliabil- ity (Level 3a) | Low Reliabil- ity (Level 3a) |
| 5 | Low Reliabil- ity (Level 3a) | Low Reliabil- ity (Level 3a) | High Reli- ability (Level 1) | High Reli- ability (Level 1) | Middle Reli- ability (Level 2a) | Middle Reli- ability (Level 2a) |
| 6 | Middle Reli- ability (Level 2a) | Middle Reli- ability (Level 2a) | Low Reliabil- ity (Level 3a) | Low Reliabil- ity (Level 3a) | High Reli- ability (Level 1) | High Reli- ability (Level 1) |

Table 3.        Bit reliabilities for 64-QAM according to signal constellations shown in Figure 4.

Moreover, Table 4 provides some examples how to combine the constellations for the transmissions 1 to 6 (using 6 different mappings).

Table 4. Examples for Constellation Rearrangement strategies for 64-QAM (using 6 mappings) with signal constellations according to Figure 4 and bit reliabilities according to Table 3.

| Transmission No. | Scheme 1 (with Constellations) | Scheme 2 (with Constellations) | Scheme 3 (with Constellations) | Scheme 4 (with Constellations) |
|---|---|---|---|---|
| 1 | 1 | 1 | 1 | 1 |
| 2 | 2 | 3 | 5 | 3 |
| 3 | 3 | 2 | 6 | 2 |
| 4 | 4 | 4 | 4 | 6 |
| 5 | 5 | 5 | 2 | 5 |
| 6 | 6 | 6 | 3 | 4 |

Two algorithms are given which describe schemes using 3 or 6 mappings overall. The approach using 3 mappings results in less system complexity, however has some performance degradation with respect to the approach using 6 mappings. The mapping for i- and q-bits can be done independently and, hence, in the following the mapping for the i-bits only is described. The algorithms for the q-bits work analog.

**64-QAM Algorithms**

A. Using 3 Mappings

1. Step (1. Transmission)

1. Step (1. Transmission)

Choose Level 1 for $i_1$

Choose Level 2 for $i_2$ (free choice if 2a or 2b) $\Rightarrow$ Level 3 for $i_3$ - free choice if 3a or 3b
$\Rightarrow$ **1. Mappingdefined**

2. Step (2. Transmission)

Options:

(a) Choose Level 1 for $i_2$
Choose Level 2 for $i_3$ (free choice if 2a or 2b) $\Rightarrow$ Level 3 for $i_1$ - free choice if 3a or 3b
(b) Choose Level 1 for $i_3$
Choose Level 2 for $i_1$ (free choice if 2a or 2b) $\Rightarrow$ Level 3 for $i_2$ - free choice if 3a or 3b
$\Rightarrow$ **2. Mapping defined**

3. Step (3. Transmission)

if (a) in 2. Step
Choose Level 1 for $i_3$
Choose Level 2 for $i_1$ (free choice if 2a or 2b) $\Rightarrow$ Level 3 for $i_2$ - free choice if 3a or 3b if (b) in 2. Step
Choose Level 1 for $i_2$
Choose Level 2 for $i_3$ (free choice if 2a or 2b) $\Rightarrow$ Level 3 for $i_1$ - free choice if 3a or 3b
$\Rightarrow$ 3. Mapping defined

4. Step (4., 7., 10, ... Transmission)

Choose one out of 3 defined mappings

5. Step (5., 8., 11, ... Transmission)

Choose one out of 3 defined mappings except the mapping used in previous transmission

6. Step (6., 9., 12, ... Transmission)

Choose one out of 3 defined mappings except the mapping used in last 2 transmissions

7. Step

Go to 4. Step

B. Using 6 Mappings

1. Step (1. Transmission)

Choose Level 1 for $i_1$
Choose Level 2 for $i_2$ (free choice if 2a or 2b) $\Rightarrow$ Level 3 for $i_3$ - free choice if 3a or 3b
$\Rightarrow$ **1. Mapping defined**

2. Step (2. Transmission)

Options:

(a) Choose Level 1 for $i_2$
Choose Level 2 for $i_3$ (free choice if 2a or 2b) $\Rightarrow$ Level 3 for $i_1$ - free choice if 3a or 3b
(b) Choose Level 1 for $i_3$ Choose Level 2 for $i_1$ (free choice if 2a or 2b) $\Rightarrow$ Level 3 for $i_2$ - free choice if 3a or 3b

$\Rightarrow$ **2. Mapping defined**

3. Step (3. Transmission)

if (a) in 2. Step
Choose Level 1 for $i_3$
Choose Level 2 for $i_1$ (free choice if 2a or 2b) $\Rightarrow$ Level 3 for $i_2$ - free choice if 3a or 3b if (b) in 2. Step
Choose Level 1 for $i_2$
Choose Level 2 for $i_3$ (free choice if 2a or 2b) $\Rightarrow$ Level 3 for $i_1$ - free choice if 3a or 3b
$\Rightarrow$ **3. Mapping defined**

4. Step (4. Transmission)

Choose Level 1 for one bit out of $i_1$, $i_2$ or $i_3$
Choose Level 2 for one out of two remaining bits with following restrictions

(a1) if in one of the previous transmission 2a was used for this bit then use 2b
(a2) if in one of the previous transmission 2b was used for this bit then use 2a
$\Rightarrow$ Level 3 for remaining bit with following restrictions
(b1) if in one of the previous transmission 3a was used for this bit then use 3b
(b2) if in one of the previous transmission 3bwas used for this bit then use 3a
$\Rightarrow$ **4. Mapping defined**

5. Step (5. Transmission)

Choose Level 1 for one out of two bits not having Level 1 in 4. Step
Choose Level 2 for one out of two bits not having Level 2 in 4. Step with following restrictions

(a1) if in one of the previous transmission 2a was used for this bit then use 2b
(a2) if in one of the previous transmission 2b was used for this bit then use 2a
$\Rightarrow$ Level 3 for remaining bit with following restrictions
(b1) if in one of the previous transmission 3a was used for this bit then use 3b
(b2) if in one of the previous transmission 3b was used for this bit then use 3a
$\Rightarrow$ **5. Mapping defined**

6. Step (6. Transmission)

Choose Level 1 for bit not having Level 1 in 4. Step and 5. Step
Choose Level 2 for bit not having Level 2 in 4. Step and 5. Step with following restrictions

(a1) if in one of the previous transmission 2a was used for this bit then use 2b
(a2) if in one of the previous transmission 2b was used for this bit then use 2a
$\Rightarrow$ Level 3 for remaining bit with following restrictions
(b1) if in one of the previous transmission 3a was used for this bit then use 3b
(b2) if in one of the previous transmission 3b was used for this bit then use 3a
$\Rightarrow$ **6. Mapping defined**

7. Step (7., 13., 19., ... Transmission)

Choose one out of 6 defined mappings

8. Step (8., 14., 20., ... Transmission)

Choose one out of 6 defined mappings except

(a) the mapping used in 7. Step (previous transmission)
(b) the mapping giving Level 1 reliability to the same bit as in previous transmission

9. Step (9., 15., 21., ... Transmission)

Choose one out of 6 defined mappings with giving Level 1 reliability to the bit not having Level 1 in last 2 transmissions

10. Step (10., 16., 22., ... Transmission)

Choose one out of 3 remaining mappings not used in last 3 transmissions

11. Step (11., 17., 23., ... Transmission)

Choose one out of 2 remaining mappings not used in last 4 transmissions

12. Step (12., 18., 24., ... Transmission)

Choose remaining mapping not used in last 5 transmissions

13. Step

Go to 7. Step

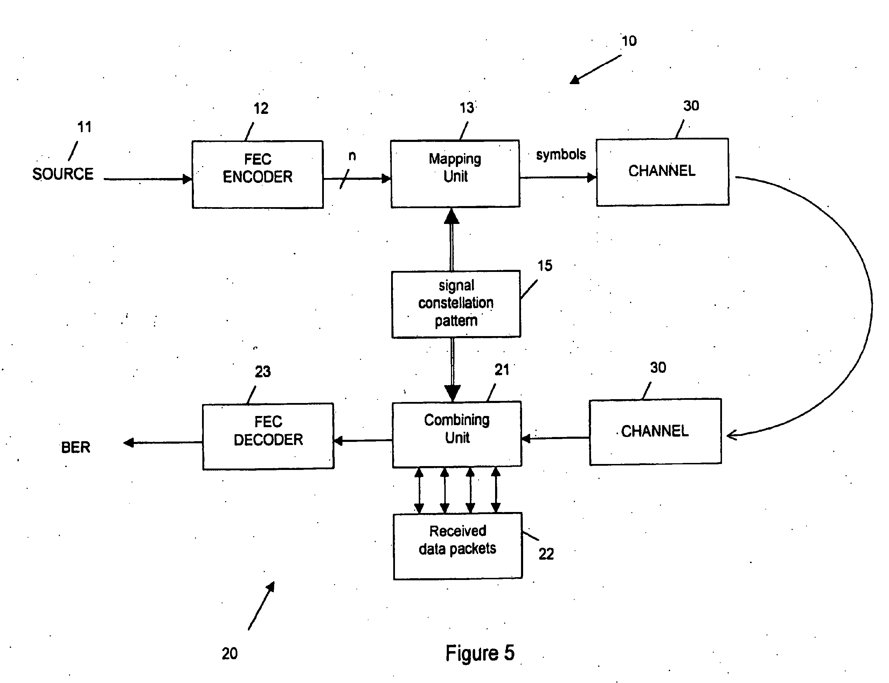

Figure 5 shows an exemplary embodiment of a communication system to which the present invention can be applied. More specifically, the communication system comprises a transmitter 10 and a receiver 20 which communicate through a channel 30 which can either be wire-bound or wireless, i.e. an air interface. From a data source 11, data packets are supplied to a FEC encoder 12, where redundancy bits are added to correct errors. The n bits output from the FEC decoder are subsequently supplied to a mapping unit 13 acting as a modulator to output symbols formed according to the applied modulation scheme stored as a constellation pattern in a table 15. Upon transmission over the channel 30, the receiver 20 checks the received data packets, for example, by means of a cyclic redundancy check (CRC) for correctness.

If the received data packets are erroneous, the same are stored in a temporary buffer 22 for subsequent soft combining with the retransmitted data packets.

A retransmission is launched by an automatic repeat request issued by an error detector (not shown) with the result that an identical data packet is transmitted from the transmitter 10. In the combining unit 21, the previously received erroneous data packets are soft-combined with the retransmitted data packets. The combining unit 21 also acts as a demodulator and the same signal constellation pattern stored in the table 15 is used to demodulate the symbol which was used during the modulation of that symbol.

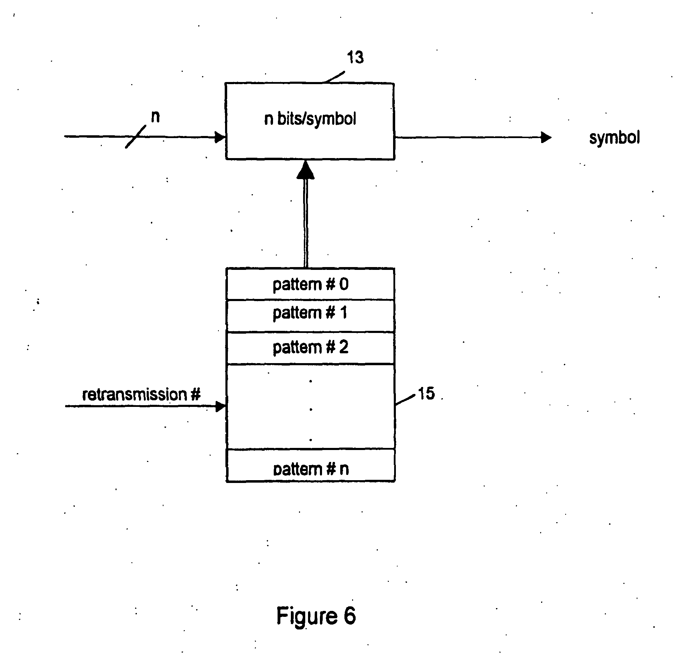

As illustrated in figure 6, the table 15 stores a plurality of signal constellation patterns which are selected for the individual (re)-transmissions according to a predetermined scheme. The scheme, i.e. the sequence of signal constellation patterns used for modulating/demodulating are either pre-stored in the transmitter and the receiver or are signaled by transmitter to the receiver prior to usage.

As mentioned before, the method underlying the invention rearranges the signal constellation patterns for the individual (re)-transmissions according to a predetermined scheme, such that the mean bit reliabilities are averaged out. Hence, the performance of the FEC decoder 23 is significantly improved, resulting in a low bit error rate (BER) output from the decoder.

**Claims**

1.  A transmission apparatus (10) for transmitting data comprising:

    a mapping unit (13) adapted to modulate data using a plurality of mappings for a 16 QAM or 64 QAM modulation scheme;
    the transmission apparatus being adapted to transmit data modulated using one of a plurality of mappings in a first transmission, and to retransmit data modulated using another one of the plurality of mappings in a retransmission; and
    wherein each of the mappings is different from each other in that at least one of bit positions in a bit sequence in a symbol comprising a plurality of bits and a logical value of a bit in the bit sequence in a symbol.

2.  The transmission apparatus according to claim 1, further:

    adapted to select one of the mappings and to transmit data using the selected one of the mappings.

3.  The transmission apparatus according to claim 1 or 2, further comprising:

    a table (15) adapted to store the plurality of mappings, wherein said transmission apparatus being adapted to transmit data using one of the mappings in the table.

4.  The transmission apparatus according to one of claims 1 to 3, wherein one of the mappings is produced by rearranging the bit sequence.

5.  The transmission apparatus according to one of claims 1 to 4, wherein one of the mappings is produced by at least one of swapping a bit with other bits in the bit sequence and inverting a logical value of a bit in the bit sequence.

6.  The transmission apparatus according to one of claims 1 to 5, wherein one of the mappings is produced by, with respect to a bit sequence $i_1q_1i_2q_2$, one of swapping $i_1$ and q1 with i2 and q2 and inverting the logical values of $i_1$ and $q_1$, swapping $i_1$ and q1 with i2 and q2 and inverting the logical values of i2 and q2.

7.  The transmission apparatus according to one of claims 1 to 6, wherein said transmission apparatus is adapted to transmit data as a rearranged bit sequence according to the one of the mappings.

8.  The transmission apparatus according to one of claims 1 to 7, wherein said transmission apparatus is adapted to transmit data using a HARQ process.

9.  The transmission apparatus according to one of claims 1 to 8, wherein said transmission apparatus is adapted to transmit information indicating the mapping used for modulating data transmitted to a receiving apparatus.

10. The transmission apparatus according to one of claims 1 to 9, wherein the one of the mappings is used in accordance with a predetermined sequence.

11. A transmission method for transmitting data comprising the steps of:

    transmitting data using one of a plurality of mappings in a first transmission:

    retransmitting data using another one of the plurality of mappings in a retransmission;
    wherein each of the mappings is different from each other in that at least one of bit positions in a bit sequence in a symbol comprising a plurality of bits and a logical value of a bit in the bit sequence in a symbol.

12. The transmission method according to claim 11, further comprising:

    selecting one of the mappings, wherein data is transmitted using the selected one of the mappings.

13. The transmission method according to claims 11 or 12, wherein the plurality of mappings are stored in a table.

14. The transmission method according to one of claims 11 to 13, wherein one of the mappings is produced by rearranging the bit sequence.

15. The transmission method according to one of claims 11 to 14, wherein one of the mappings is produced by at least one of swapping a bit with another bit in the bit sequence and inverting a logical value of a bit in the bit sequence.

16. The transmission method according to one of claims 11 to 15, wherein one of the mappings is produced by, with respect to a bit sequence i1q1i2q2, one of swapping i1 and q1 with i2 and q2 and inverting logical values of i1 and q1, swapping i1 and q1 with i2 and q2 and inverting logical values of i2 and q2.

17. The transmission method according to one of claims 11 to 16, wherein data is transmitted as a rearranged bit sequence according to the one of the mappings.

**18.** The transmission method according to one of claims 11 to 17, wherein said transmission apparatus is adapted to transmit data using a HARQ process.

**19.** The transmission method according to one of claims 14 to 18 further comprising:

transmitting information indicating the mapping used for modulating data transmitted to a receiving apparatus.

**20.** The transmission method according to one of claims 11 to 19, wherein the one of the mappings is used in accordance with a predetermined sequence.

**21.** A communication system comprising:

a transmitting apparatus (10) according to one of claims 1 to 10; and
a receiving apparatus (20) being adapted to receive data transmitted by said transmitting apparatus.

**22.** A reception apparatus (20) for receiving data
adapted to receive data modulated using one of a plurality of mappings in a 16 QAM or 64 QAM modulation scheme, said reception apparatus is adapted to receive further data which includes retransmitted data modulated using another mapping of the plurality of mappings,
wherein each of mappings is different from each other in that at least one of bit positions in a bit sequence in a symbol comprising a plurality of bits and a logical value of a bit in the bit sequence in a symbol.

**23.** The reception apparatus according to claim 22, further
adapted to demodulate the received data using the one of the mappings.

**24.** The reception apparatus according to one of claims 22 or 23, wherein one of the mappings is produced by rearranging the bit sequence.

**25.** The reception apparatus according to one of claims 22 to 24, wherein one of the mappings is produced by at least one of swapping a bit with another bit in the bit sequence and inverting a logical value of a bit in the bit sequence.

**26.** The reception apparatus according to one of claims 22 to 25, wherein one of the mappings is produced by, with respect to a bit sequence i1q1i2q2, one of swapping i1 and q1 with i2 and q2 and inverting logical values of i1 and q1, swapping i1 and q1 with i2 and q2 and inverting logical values of i2 and q2.

**27.** The reception apparatus according to one of claims 22 to 26, wherein said reception apparatus is adapted to receive data modulated as a rearranged bit sequence according to the one of the mappings.

**28.** The reception apparatus according to one of claims 22 to 27, further adapted to combine the received data with the retransmitted data.

**29.** The reception apparatus according to one of claims 22 to 28, wherein said reception apparatus is adapted to receive data using a HARQ process.

**30.** The reception apparatus according to one of claims 22 to 29, wherein said reception apparatus is adapted to receive information indicating the mapping used for modulating the data.

**31.** The reception apparatus according to one of claims 22 to 30, wherein the one of the mappings is used in accordance with a predetermined sequence.

**32.** A reception method for receiving data comprising the steps of:

receiving data modulated using one of a plurality of mappings in a 16 QAM or 64 QAM modulation scheme, said received data includes retransmitted data modulated using another one of the plurality of mappings, wherein each of the mappings is different from each other in that at least one of bit positions in a bit sequence in a symbol comprising a plurality of bits and a logical value of a bit in the bit sequence in a symbol.

33. The reception method according to claim 32, further comprising:

    demodulating the received data using the one of the plurality of mappings.

34. The reception method according to claim 32 or 33, wherein one of the mappings is produced by rearranging the bit sequence.

35. The reception method according to one of claims 32 to 34, wherein one of the mappings is produced by at least one of swapping a bit with other in the bit sequence and inverting a logical value of a bit in the bit sequence.

36. The reception method according to one of claims 32 to 35, wherein one of the mappings is produced by, with respect to a bit sequence i1q1i2q2, one of swapping i1 and q1 with i2 and q2 and inverting logical values of i1 and q1, swapping i1 and q1 with i2 and q2 and inverting logical values of i2 and q2.

37. The reception method according to one of claims 32 to 36, wherein data modulated as a rearranged bit sequence according to the one of the mappings is received.

38. The reception method according to one of claims 32 to 37, further comprising:

    combining the received data with the retransmitted data.

39. The reception method according to one of claims 32 to 38, wherein data is received using a HARQ process.

40. The reception method according to one of claims 32 to 39, further comprising:

    receiving information indicating the mapping used for modulating data.

41. The reception method according to one of claims 32 to 40, wherein the one of the mappings is used in accordance with a predetermined sequence.


**Patentansprüche**

1. Übertragungsvorrichtung (10) zum Übertragen von Daten, umfassend:

    eine Zuordnungseinheit (13), die dafür ausgelegt ist, Daten unter Verwendung einer Mehrzahl von Zuordnungen für ein 16-QAM- oder 64-QAM-Modulationsschema zu modulieren;
    wobei die Übertragungsvorrichtung dafür ausgelegt ist, Daten, die unter Verwendung einer aus einer Mehrzahl von Zuordnungen moduliert werden, in einer ersten Übertragung zu übertragen und Daten, die unter Verwendung einer anderen aus der Mehrzahl von Zuordnungen moduliert werden, in einer Neuübertragung neuzuübertragen; und
    wobei jede der Zuordnungen von einer anderen dahingehend verschieden ist, dass wenigstens eine der Bitpositionen in einer Bitsequenz in einem Symbol eine Mehrzahl von Bits und einen logischen Wert eines Bits in der Bitsequenz in einem Symbol umfasst.

2. Übertragungsvorrichtung nach Anspruch 1, die des Weiteren dafür ausgelegt ist, eine der Zuordnungen auszuwählen und Daten unter Verwendung der ausgewählten der Zuordnungen zu übertragen.

3. Übertragungsvorrichtung nach Anspruch 1 oder 2, des Weiteren umfassend:

    eine Tabelle (15), die dafür ausgelegt ist, die Mehrzahl von Zuordnungen zu speichern, wobei die Übertragungsvorrichtung dafür ausgelegt ist, Daten unter Verwendung einer der Zuordnungen in der Tabelle zu übertragen.

4. Übertragungsvorrichtung nach einem der Ansprüche 1 bis 3, wobei eine der Zuordnungen durch Neuanordnen der Bitsequenz erzeugt wird.

5. Übertragungsvorrichtung nach einem der Ansprüche 1 bis 4, wobei eine der Zuordnungen durch wenigstens eines

EP 1 760 928 B1

von einem Austauschen eines Bits gegen andere Bits in der Bitsequenz und Invertieren eines logischen Wertes eines Bits in der Bitsequenz erzeugt wird.

6. Übertragungsvorrichtung nach einem der Ansprüche 1 bis 5, wobei eine der Zuordnungen in Bezug auf eine Bitsequenz i1q1i2q2 durch eines von einem Austauschen von i1 und q1 gegen i2 und q2 und Invertieren der logischen Werte von i1 und q1, Austauschen von i1 und q1 gegen i2 und q2 und Invertieren der logischen Werte von i2 und q2 erzeugt wird.

7. Übertragungsvorrichtung nach einem der Ansprüche 1 bis 6, wobei die Übertragungsvorrichtung dafür ausgelegt ist, Daten als neuangeordnete Bitsequenz entsprechend der einen der Zuordnungen zu übertragen.

8. Übertragungsvorrichtung nach einem der Ansprüche 1 bis 7, wobei die Übertragungsvorrichtung dafür ausgelegt ist, Daten unter Verwendung eines HARQ-Prozesses zu übertragen.

9. Übertragungsvorrichtung nach einem der Ansprüche 1 bis 8, wobei die Übertragungsvorrichtung dafür ausgelegt ist, Information zur Angabe der Zuordnung, die zum Modulieren der an eine Empfangsvorrichtung übertragenen Daten verwendet wird, zu übertragen.

10. Übertragungsvorrichtung nach einem der Ansprüche 1 bis 9, wobei die eine der Zuordnungen in Entsprechung zu einer vorbestimmten Sequenz verwendet wird.

11. Übertragungsverfahren zum Übertragen von Daten, umfassend die nachfolgenden Schritte:

Übertragen von Daten unter Verwendung einer aus einer Mehrzahl von Zuordnungen in einer ersten Übertragung;
Neuübertragen von Daten unter Verwendung einer anderen aus der Mehrzahl von Zuordnungen in einer Neuübertragung;
wobei jede der Zuordnungen von einer anderen dahingehend verschieden ist, dass wenigstens eine der Bitpositionen in einer Bitsequenz in einem Symbol eine Mehrzahl von Bits und einen logischen Wert eines Bits in der Bitsequenz in einem Symbol umfasst.

12. Übertragungsverfahren nach Anspruch 11, des Weiteren umfassend:

Auswählen einer der Zuordnungen, wobei Daten unter Verwendung der ausgewählten der Zuordnungen übertragen werden.

13. Übertragungsverfahren nach Ansprüchen 11 oder 12, wobei die Mehrzahl von Zuordnungen in einer Tabelle gespeichert wird.

14. Übertragungsverfahren nach einem der Ansprüche 11 bis 13, wobei eine der Zuordnungen durch Neuanordnen der Bitsequenz erzeugt wird.

15. Übertragungsverfahren nach einem der Ansprüche 11 bis 14, wobei eine der Zuordnungen durch wenigstens eines von einem Austauschen eines Bits gegen ein anderes Bit in der Bitsequenz und Invertieren eines logischen Wertes eines Bits in der Bitsequenz erzeugt wird.

16. Übertragungsverfahren nach einem der Ansprüche 11 bis 15, wobei eine der Zuordnungen in Bezug auf eine Bitsequenz i1q1i2q2 durch eines von einem Austauschen von i1 und q1 gegen i2 und q2 und Invertieren von logischen Werten von i1 und q1, Austauschen von i1 und q1 gegen i2 und q2 und Invertieren von logischen Werten von i2 und q2 erzeugt wird.

17. Übertragungsverfahren nach einem der Ansprüche 11 bis 16, wobei Daten als neuangeordnete Bitsequenz entsprechend der einen der Zuordnungen übertragen werden.

18. Übertragungsverfahren nach einem der Ansprüche 11 bis 17, wobei die Übertragungsvorrichtung dafür ausgelegt ist, Daten unter Verwendung eines HARQ-Prozesses zu übertragen.

19. Übertragungsverfahren nach einem der Ansprüche 14 bis 18, des Weiteren umfassend:

Übertragen von Information zur Angabe der Zuordnung, die zum Modulieren von an eine Empfangsvorrichtung übertragenen Daten verwendet wird.

20. Übertragungsverfahren nach einem der Ansprüche 11 bis 19, wobei die eine der Zuordnungen in Entsprechung zu einer vorbestimmten Sequenz verwendet wird.

21. Kommunikationssystem, umfassend:

   eine Übertragungsvorrichtung (10) nach einem der Ansprüche 1 bis 10; und
   eine Empfangsvorrichtung (20), die dafür ausgelegt ist, Daten zu empfangen, die von der Übertragungsvorrichtung übertragen werden.

22. Empfangsvorrichtung (20) zum Empfangen von Daten, die dafür ausgelegt ist, Daten zu empfangen, die unter Verwendung einer aus einer Mehrzahl von Zuordnungen in einem 16-QAM- oder 64-QAM-Modulationsschema moduliert werden, wobei die Empfangsvorrichtung dafür ausgelegt ist, weitere Daten zu empfangen, die neuübertragene Daten beinhalten, die unter Verwendung einer anderen Zuordnung aus der Mehrzahl von Zuordnungen moduliert werden,
wobei jede der Zuordnungen von einer anderen dahingehend verschieden ist, dass wenigstens eine der Bitpositionen in einer Bitsequenz in einem Symbol eine Mehrzahl von Bits und einen logischen Wert eines Bits in der Bitsequenz in einem Symbol umfasst.

23. Empfangsvorrichtung nach Anspruch 22, die des Weiteren dafür ausgelegt ist, die empfangenen Daten unter Verwendung der einen der Zuordnungen zu demodulieren.

24. Empfangsvorrichtung nach einem der Ansprüche 22 oder 23, wobei eine der Zuordnungen durch Neuanordnen der Bitsequenz erzeugt wird.

25. Empfangsvorrichtung nach einem der Ansprüche 22 bis 24, wobei eine der Zuordnungen durch wenigstens eines von einem Austauschen eines Bits gegen ein anderes Bit in der Bitsequenz und Invertieren eines logischen Wertes eines Bits in der Bitsequenz erzeugt wird.

26. Empfangsvorrichtung nach einem der Ansprüche 22 bis 25, wobei eine der Zuordnungen in Bezug auf eine Bitsequenz i1q1i2q2 durch eines von einem Austauschen von i1 und q1 gegen i2 und q2 und Invertieren von logischen Werten von i1 und q1, Austauschen von i1 und q1 gegen i2 und q2 und Invertieren von logischen Werten von i2 und q2 erzeugt wird.

27. Empfangsvorrichtung nach einem der Ansprüche 22 bis 26, wobei die Empfangsvorrichtung dafür ausgelegt ist, Daten zu empfangen, die als neuangeordnete Bitsequenz entsprechend der einen der Zuordnungen moduliert werden.

28. Empfangsvorrichtung nach einem der Ansprüche 22 bis 27, die des Weiteren dafür ausgelegt ist, die empfangenen Daten mit den neuübertragenen Daten zu kombinieren.

29. Empfangsvorrichtung nach einem der Ansprüche 22 bis 28, wobei die Empfangsvorrichtung dafür ausgelegt ist, Daten unter Verwendung eines HARQ-Prozesses zu empfangen.

30. Empfangsvorrichtung nach einem der Ansprüche 22 bis 29, wobei die Empfangsvorrichtung dafür ausgelegt ist, Information zur Angabe der Zuordnung, die zum Modulieren der Daten verwendet wird, zu empfangen.

31. Empfangsvorrichtung nach einem der Ansprüche 22 bis 30, wobei die eine der Zuordnungen in Entsprechung zu einer vorbestimmten Sequenz verwendet wird.

32. Empfangsverfahren zum Empfangen von Daten, umfassend die nachfolgenden Schritte:

   Empfangen von Daten, die unter Verwendung einer aus einer Mehrzahl von Zuordnungen in einem 16-QAM- oder 64-QAM-Modulationsschema moduliert werden, wobei die empfangenen Daten neuübertragene Daten beinhalten, die unter Verwendung einer anderen aus der Mehrzahl von Zuordnungen moduliert werden,
   wobei jede der Zuordnungen von einer anderen dahingehend verschieden ist, dass wenigstens eine der Bitpositionen in einer Bitsequenz in einem Symbol eine Mehrzahl von Bits und einen logischen Wert eines Bits in der Bitsequenz in einem Symbol umfasst.

33. Empfangsverfahren nach Anspruch 32, des Weiteren umfassend:

   Demodulieren der empfangenen Daten unter Verwendung der einen aus der Mehrzahl von Zuordnungen.

34. Empfangsverfahren nach Anspruch 32 oder 33, wobei eine der Zuordnungen durch Neuanordnen der Bitsequenz erzeugt wird.

35. Empfangsverfahren nach einem der Ansprüche 32 bis 34, wobei eine der Zuordnungen durch wenigstens eines von einem Austauschen eines Bits gegen andere bzw. ein anderes in der Bitsequenz und Invertieren eines logischen Wertes eines Bits in der Bitsequenz erzeugt wird.

36. Empfangsverfahren nach einem der Ansprüche 32 bis 35, wobei eine der Zuordnungen in Bezug auf eine Bitsequenz i1q1i2q2 durch eines von einem Austauschen von i1 und q1 gegen i2 und q2 und Invertieren von logischen Werten von i1 und q1, Austauschen von i1 und q1 gegen i2 und q2 und Invertieren von logischen Werten von i2 und q2 erzeugt wird.

37. Empfangsverfahren nach einem der Ansprüche 32 bis 36, wobei Daten empfangen werden, die als neuangeordnete Bitsequenz entsprechend der einen der Zuordnungen moduliert werden.

38. Empfangsverfahren nach einem der Ansprüche 32 bis 37, des Weiteren umfassend:

   Kombinieren der empfangenen Daten mit den neuübertragenen Daten.

39. Empfangsverfahren nach einem der Ansprüche 32 bis 38, wobei Daten unter Verwendung eines HARQ-Prozesses empfangen werden.

40. Empfangsverfahren nach einem der Ansprüche 32 bis 39, des Weiteren umfassend:

   Empfangen von Information zur Angabe der Zuordnung, die zum Modulieren der Daten verwendet wird.

41. Empfangsverfahren nach einem der Ansprüche 32 bis 40, wobei die eine der Zuordnungen in Entsprechung zu einer vorbestimmten Sequenz verwendet wird.

**Revendications**

1. Appareil de transmission (10) pour transmettre des données, comprenant :

   - une unité de mappage (13) adaptée à moduler des données en utilisant une pluralité de mappages pour un système de modulation 16 QAM ou 64 QAM ;
   - l'appareil de transmission étant adapté à transmettre des données modulées en utilisant un mappage d'une pluralité de mappages dans une première transmission et à retransmettre des données modulées en utilisant un autre mappage de la pluralité de mappages dans une retransmission ; et
   - dans lequel chacun des mappages est différent des autres en ce qu'au moins une des positions de bits d'une séquence de bits d'un symbole comprend une pluralité de bits et la valeur logique d'un bit de la séquence de bits d'un symbole.

2. Appareil de transmission selon la revendication 1, adapté en outre :

   - à sélectionner l'un des mappages et à transmettre des données en utilisant le mappage sélectionné parmi les mappages.

3. Appareil de transmission selon la revendication 1 ou 2, comprenant en outre :

   - un tableau (15) adapté à mémoriser la pluralité de mappages, dans lequel ledit appareil de transmission est adapté à transmettre des données en utilisant l'un des mappages du tableau.

4.  Appareil de transmission selon l'une des revendications 1 à 3, dans lequel l'un des mappages est produit en réarrangeant la séquence de bits.

5.  Appareil de transmission selon l'une des revendications 1 à 4, dans lequel l'un des mappages est produit au moins par l'échange d'un bit avec d'autres bits de la séquence de bits ou l'inversion de la valeur logique d'un bit de la séquence de bits.

6.  Appareil de transmission selon l'une des revendications 1 à 5, dans lequel l'un des mappages est produit, par rapport à une séquence de bits i1q1i2q2, par un échange de i1 et q1 avec i2 et q2 et une inversion des valeurs logiques de i1 et q1 ou un échange de i1 et q1 avec i2 et q2 et une inversion des valeurs logiques de i2 et q2.

7.  Appareil de transmission selon l'une des revendications 1 à 6, dans lequel ledit appareil de transmission est adapté à transmettre des données sous la forme d'une séquence de bits réarrangée conformément à l'un des mappages.

8.  Appareil de transmission selon l'une des revendications 1 à 7, dans lequel ledit appareil de transmission est adapté à transmettre des données en utilisant un processus HARQ.

9.  Appareil de transmission selon l'une des revendications 1 à 8, dans lequel ledit appareil de transmission est adapté à transmettre des informations indiquant le mappage utilisé pour moduler des données transmises vers un appareil de réception.

10. Appareil de transmission selon l'une des revendications 1 à 9, dans lequel l'un des mappages est utilisé conformément à une séquence prédéterminée.

11. Procédé de transmission pour transmettre des données, comprenant les étapes consistant à :

    - transmettre des données en utilisant un mappage d'une pluralité de mappages dans une première transmission ;
    - retransmettre des données en utilisant un autre mappage de la pluralité de mappages dans une retransmission ;
    - dans lequel chacun des mappages est différent des autres en ce qu'au moins une des positions de bits d'une séquence de bits d'un symbole comprend une pluralité de bits et la valeur logique d'un bit de la séquence de bits d'un symbole.

12. Procédé de transmission selon la revendication 11, comprenant en outre :

    - la sélection de l'un des mappages, dans lequel les données sont transmises en utilisant le mappage sélectionné parmi les mappages.

13. Procédé de transmission selon les revendications 11 ou 12, dans lequel la pluralité de mappages est mémorisée dans un tableau.

14. Procédé de transmission selon l'une des revendications 11 à 13, dans lequel l'un des mappages est produit en réarrangeant la séquence de bits.

15. Procédé de transmission selon l'une des revendications 11 à 14, dans lequel l'un des mappages est produit au moins par l'échange d'un bit avec un autre bit de la séquence de bits ou l'inversion de la valeur logique d'un bit de la séquence de bits.

16. Procédé de transmission selon l'une des revendications 11 à 15, dans lequel l'un des mappages est produit, par rapport à une séquence de bits i1q1i2q2, par un échange de i1 et q1 avec i2 et q2 et une inversion des valeurs logiques de i1 et q1 ou un échange de i1 et q1 avec i2 et q2 et une inversion des valeurs logiques de i2 et q2.

17. Procédé de transmission selon l'une des revendications 11 à 16, dans lequel les données sont transmises selon une séquence de bits réarrangée conformément à l'un des mappages.

18. Procédé de transmission selon l'une des revendications 11 à 17, dans lequel ledit appareil de transmission est adapté à transmettre des données en utilisant un processus HARQ.

19. Procédé de transmission selon l'une des revendications 14 à 18, comprenant en outre :

    - la transmission d'informations indiquant le mappage utilisé pour moduler les données transmises vers un appareil de réception.

20. Procédé de transmission selon l'une des revendications 11 à 19, dans lequel l'un des mappages est utilisé conformément à une séquence prédéterminée.

21. Système de communication comprenant :

    - un appareil de transmission (10) selon l'une des revendications 1 à 10 ; et
    - un appareil de réception (20) adapté à recevoir des données transmises par ledit appareil de transmission.

22. Appareil de réception (20) pour recevoir des données,

    - adapté à recevoir des données modulées en utilisant un mappage d'une pluralité de mappages dans un système de modulation 16 QAM ou 64 QAM, ledit appareil de réception étant adapté à recevoir d'autres données incluant des données retransmises modulées en utilisant un autre mappage de la pluralité de mappages,
    - dans lequel chacun des mappages est différent des autres en ce qu'au moins une des positions de bits d'une séquence de bits d'un symbole comprend une pluralité de bits et la valeur logique d'un bit de la séquence de bits d'un symbole.

23. Appareil de réception selon la revendication 22, adapté en outre :

    - à démoduler les données reçues en utilisant l'un des mappages.

24. Appareil de réception selon l'une des revendications 22 ou 23, dans lequel l'un des mappages est produit en réarrangeant la séquence de bits.

25. Appareil de réception selon l'une des revendications 22 à 24, dans lequel l'un des mappages est produit au moins par l'échange d'un bit avec un autre bit de la séquence de bits ou l'inversion de la valeur logique d'un bit de la séquence de bits.

26. Appareil de réception selon l'une des revendications 22 à 25, dans lequel l'un des mappages est produit, par rapport à une séquence de bits $i1q1i2q2$, par un échange de $i1$ et $q1$ avec $i2$ et $q2$ et une inversion des valeurs logiques de $i1$ et $q1$ ou un échange de $i1$ et $q1$ avec $i2$ et $q2$ et une inversion des valeurs logiques de $i2$ et $q2$.

27. Appareil de réception selon l'une des revendications 22 à 26, dans lequel ledit appareil de réception est adapté à recevoir des données modulées sous la forme d'une séquence de bits réarrangée conformément à l'un des mappages.

28. Appareil de réception selon l'une des revendications 22 à 27, adapté en outre à combiner les données reçues avec les données retransmises.

29. Appareil de réception selon l'une des revendications 22 à 28, dans lequel ledit appareil de réception est adapté à recevoir des données en utilisant un processus HARQ.

30. Appareil de réception selon l'une des revendications 22 à 29, dans lequel ledit appareil de réception est adapté à recevoir des informations indiquant le mappage utilisé pour moduler les données.

31. Appareil de réception selon l'une des revendications 22 à 30, dans lequel l'un des mappages est utilisé conformément à une séquence prédéterminée.

32. Procédé de réception pour recevoir des données, comprenant les étapes consistant à :

    - recevoir des données modulées en utilisant un mappage d'une pluralité de mappages dans un système de modulation 16 QAM ou 64 QAM, lesdites données reçues incluant des données retransmises modulées en utilisant un autre mappage de la pluralité de mappages;

- dans lequel chacun des mappages est différent des autres en ce qu'au moins une des positions de bits d'une séquence de bits d'un symbole comprend une pluralité de bits et la valeur logique d'un bit de la séquence de bits d'un symbole.

33. Procédé de réception selon la revendication 32, comprenant en outre :

- la démodulation des données reçues en utilisant l'un des mappages de la pluralité de mappages.

34. Procédé de réception selon la revendication 32 ou 33, dans lequel l'un des mappages est produit en réarrangeant la séquence de bits.

35. Procédé de réception selon l'une des revendications 32 à 34, dans lequel l'un des mappages est produit au moins par l'échange d'un bit avec un autre de la séquence de bits ou l'inversion de la valeur logique d'un bit de la séquence de bits.

36. Procédé de réception selon l'une des revendications 32 à 35, dans lequel l'un des mappages est produit, par rapport à une séquence de bits i1q1i2q2, par un échange de i1 et q1 avec i2 et q2 et une inversion des valeurs logiques de i1 et q1 ou un échange de i1 et q1 avec i2 et q2 et une inversion des valeurs logiques de i2 et q2.

37. Procédé de réception selon l'une des revendications 32 à 36, dans lequel sont reçues des données modulées sous la forme d'une séquence de bits réarrangée conformément à l'un des mappages.

38. Procédé de réception selon l'une des revendications 32 à 37, comprenant en outre :

- la combinaison des données reçues avec les données retransmises.

39. Procédé de réception selon l'une des revendications 32 à 38, dans lequel les données sont reçues en utilisant un processus HARQ.

40. Procédé de réception selon l'une des revendications 32 à 39, comprenant en outre :

- la réception d'informations indiquant le mappage utilisé pour moduler les données.

41. Procédé de réception selon l'une des revendications 32 à 40, dans lequel l'un des mappages est utilisé conformément à une séquence prédéterminée.

Figure 1

Figure 2 a

# Constellation 3

# Constellation 4

Figure 2 b

EP 1 760 928 B1

Figure 3

Figure 4 a

Figure 4 b

EP 1 760 928 B1

Figure 4 c

Figure 5

EP 1 760 928 B1

n bits/symbol — 13

n → [n bits/symbol] → symbol

pattern # 0
pattern # 1
pattern # 2
.
.
.
pattern # n

retransmission # → 15

Figure 6

EP 1 760 928 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 938207 A

- US 6138260 A

**Non-patent literature cited in the description**

- **S. Kallel.** Analysis of a type II hybrid ARQ scheme with code combining. *IEEE Transactions on Communications,* August 1990, vol. 38 (8
- **S. Kallel ; R. Link ; S. Bakhtiyari.** Throughput performance of Memory ARO schemes. *IEEE Transactions on Vehicular Technology,* May 1999, vol. 48 (3
- **D. Chase.** Code combining: A maximum-likelihood decoding approach for combining an arbitrary number of noisy packets. *IEEE Trans. Commun.,* May 1985, vol. COM-33, 385-393

- **B.A. Harvey ; S. Wicker.** Packet Combining Systems based on the Viterbi Decoder. *IEEE Transactions on Communications,* April 1994, vol. 42 (2/3/4
- **M.P. Schmitt.** Hybrid ARQ. Scheme employing TCM and Packet Combining. *Electronics Letters,* September 1998, vol. 34 (18